# DEMANDE DE BREVET EUROPEEN

(11) **EP 0 753 622 A1**
(43) Date de publication de la demande: **15.01.1997**
(21) Numéro de dépôt: 96401409.6
(22) Date de dépôt: 26.06.1996
(51) Int. Cl.: D21B 1/32, D21D 5/02

(54) **Procédé de séparation des fibres de papier et des contaminants et appareil pour la mise en oeuvre de ce procédé**

(30) Priorité: 13.07.1995 FR 9508499
(71) Demandeur: E & M LAMORT, F-51300 Vitry le François (FR)
(72) Inventeur: Serres, Alain, 51100 Reims (FR); Fejoz, Roland, Blacy, 51300 Vitry le François (FR)
(74) Mandataire: Loyer, Bertrand

(57) **Abrégé**

Procédé de séparation des fibres de papier et des contaminants pour des mélanges contenant de l'eau, des fibres, des contaminants, des pastilles de papier ou de carton caractérisé par le fait que le mélange est soumis : dans un premier temps à un tamisage; dans un deuxième temps à un brassage puis dans un troisième temps à un nouveau tamisage avec addition d'eau, ce après quoi la pâte retenue par le tamis est évacuée.

## Description

La présente invention est relative à l'industrie du recyclage des papiers usés.

Une chaîne de recyclage de papiers usés comporte un dispositif, appelé "pulpeur" dans lequel les paquets de vieux papiers sont triturés en présence d'eau afin de former un liquide pâteux appelé pulpe. Cette pulpe contient non seulement des fibres de papier, mais également de nombreux corps étrangers : débris de feuilles en plastique par exemple, débris métalliques tels que agrafes, trombones, rivets ; et même des débris de toute sorte mélangés aux balles de vieux papiers lors des opérations de récupération des vieux papiers. Tous ces corps étrangers sont classés sous l'appellation "contaminants". Il existe différents types de pulpeurs, tels que par exemple les pulpeurs à hélice constitués d'une cuve ayant la forme d'un volume de révolution à la base et au centre duquel est placé un organe hélicoïdal. Les papiers de récupération sont déversés dans cette cuve, on y ajoute de l'eau et la rotation de l'organe hélicoïdal provoque un brassage intense au cours duquel les papiers sont désintégrés par attrition. Une telle opération dure environ 30 minutes au bout desquelles la cuve est remplie d'un liquide pâteux comportant la pulpe de pâte à papier et les contaminants.

Il peut arriver que le mélange de vieux papiers contienne des papiers nécessitant, pour être transformés en pulpe, soit un temps de séjour plus long, soit une température plus élevée, soit encore l'ajout de produits chimiques tels que soude, acide sulfurique etc, dans ce cas on obtient un mélange contenant la pulpe, les contaminants et les pastilles qui sont des fragments de papier ou de carton.

Le pulpeur est alors vidé dans un dispositif de vidange comportant des moyens pour séparer les contaminants de la pâte à papier. Ce dispositif est souvent désigné par le terme de "poire de vidange", le mot poire signifiant qu'il est alternativement rempli et vidé. Le temps de fonctionnement d'une poire de vidange est environ 1/5 du temps de fonctionnement du pulpeur. Une poire de vidange comporte d'une façon générale un tamis devant lequel se déplace un organe de nettoyage communément appelé "foil". Cet organe a pour but d'empêcher que les contaminants ne viennent obstruer le tamis.

Il est bien évident qu'au fur et à mesure que la pulpe de pâte à papier traverse le tamis et est évacuée, la proportion de contaminants et de pastilles dans la poire de vidange augmente ; ceci a pour effet qu'au fur et à mesure que le pulpeur se vide , il est de plus en plus difficile d'éviter un colmatage du tamis par les contaminants et les pastilles et cela d'autant plus que la masse des contaminants et des pastilles constitue une sorte de corps filtrant qui retient une quantité non négligeable de pulpe.

On a alors proposé d'évacuer la fraction retenue (au moins partiellement) hors de la poire de vidange au fur et à mesure que le pulpeur est vidé.

Ce procédé donne de bons résultats, mais il n'en demeure pas moins qu'une quantité non négligeable de pulpe est entraînée avec les contaminants et est donc perdue.

De même les pastilles sont perdues alors qu'elles pourraient être transformées en pulpe et être récupérées.

La présente invention a pour objet de remédier à cet inconvénient et concerne un procédé comportant les phases connues de mise en pulpe dans un pulpeur, de vidange du pulpeur dans une poire de vidange et d'extraction de la fraction retenue hors de la poire de vidange et de récupération de la pâte à papier et des pastilles entraînée avec les contaminants, caractétisé par le fait que cette opération complémentaire comporte les phases suivantes : dans un premier temps tamisage, dans un deuxième temps brassage de la fraction retenue, dans un troisième temps re-tamisage ce après quoi les contaminants sont définitivement rejetés.

Le procédé n'est pas limité au traitement de la fraction retenue par la "poire de vidange" mais s'applique généralement chaque fois que les contaminants évacués par un équipement quelconque comporte de la pulpe et éventuellement des pastilles.

La présente invention concerne également un appareil pour la mise en oeuvre dudit procédé caractérisé par le fait qu'il comporte une zone de tamisage et une zone de brassage.

De préférence cet appareil est constitué par un tambour cylindrique à axe sensiblement horizontal dont la pente est comprise entre 0 et 15°, comprenant deux chambres: une chambre de tamisage et une chambre de brassage et des moyens pour faire aller les produits de la chambre de tamisage à la chambre de brassage puis de celle-ci en retour vers la chambre de tamisage.

De préférence, le tambour cylindrique peut tourner autour de son axe dans l'un ou l'autre sens et comporte un organe hélicoïdal qui, lorsque le tambour tourne dans un sens déplace la masse des contaminants pour les faire aller de la chambre de tamisage à la chambre de brassage, et qui, lorsqu'il tourne en sens inverse ramène lesdits contaminants et leur eau de lavage dans la chambre de tamisage où l'eau chargée de pulpe est séparée desdits contaminants.

Selon un premier mode de réalisation le tambour comporte une chambre additionnelle située entre la chambre de tamisage et la chambre de brassage, cette chambre additionnelle étant entièrement occupée par une vis d'Archimède.

Selon un deuxième mode de réalisation, la chambre de tamisage comporte une vis d'Archimède percée en son milieu d'un alésage cylindrique ou conique par lequel arrivent la matière à traiter et l'eau de lavage.

A titre d'exemples non limitatifs et pour faciliter la compréhension de l'invention on a représenté aux dessins annexés :
Figure 1 : une vue schématique d'une installation comprenant un dispositif selon l'invention,
Figure 2 : une vue en coupe longitudinale d'un premier mode de réalisation,
Figure 3 : une vue en bout de la figure 2,
Figure 4 : une vue en coupe longitudinale d'un deuxième mode de réalisation,
Figure 5 : une vue en bout de la figure 4.

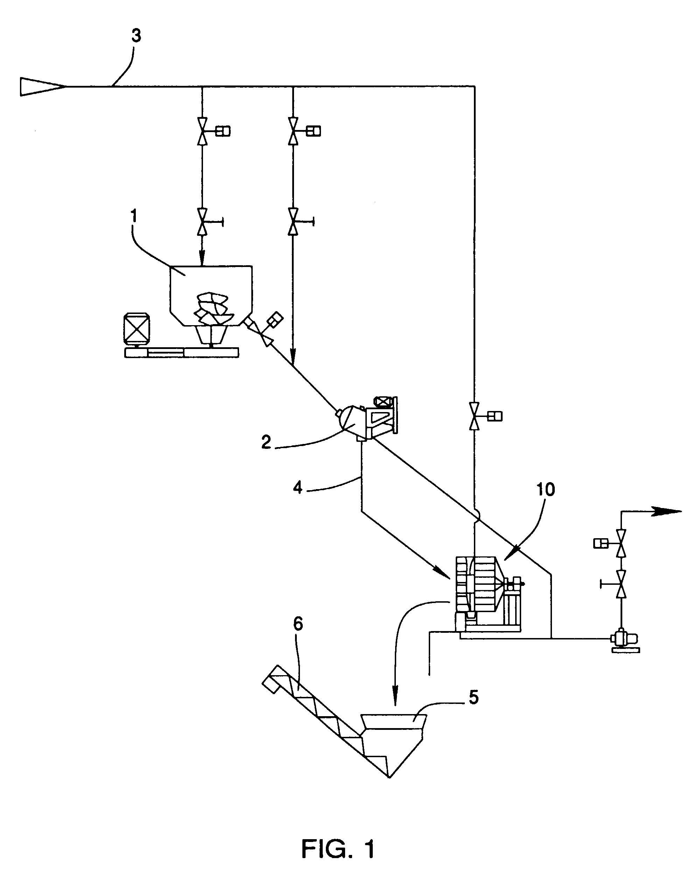

En se reportant à la figure 1, on voit que l'installation de traitement de vieux papiers comprend, comme cela est connu un pulpeur 1, du type "pulpeur hélico" et une "poire de vidange" 2, l'eau arrivant dans le pulpeur 1 par une canalisation 3.

Dans les dispositifs connus les contaminants sont évacués de la poire 2 par une canalisation 4, qui les amène directement dans la trémie d'admission 5 et d'un convoyeur 6 qui les évacue.

Il est connu de disposer sur le parcours des contaminants, entre la poire 2 et le convoyeur d'évacuation 6, un tambour perforé appelé trommel, dans lequel les contaminants sont brassés, de sorte qu'une partie de la pâte entraînée avec les contaminants soit récupérée.

Cependant cette récupération est insuffisante parce qu'elle se borne à un tamisage, alors que selon la présente invention on procède : à un tamisage, puis un brassage, puis un tamisage.

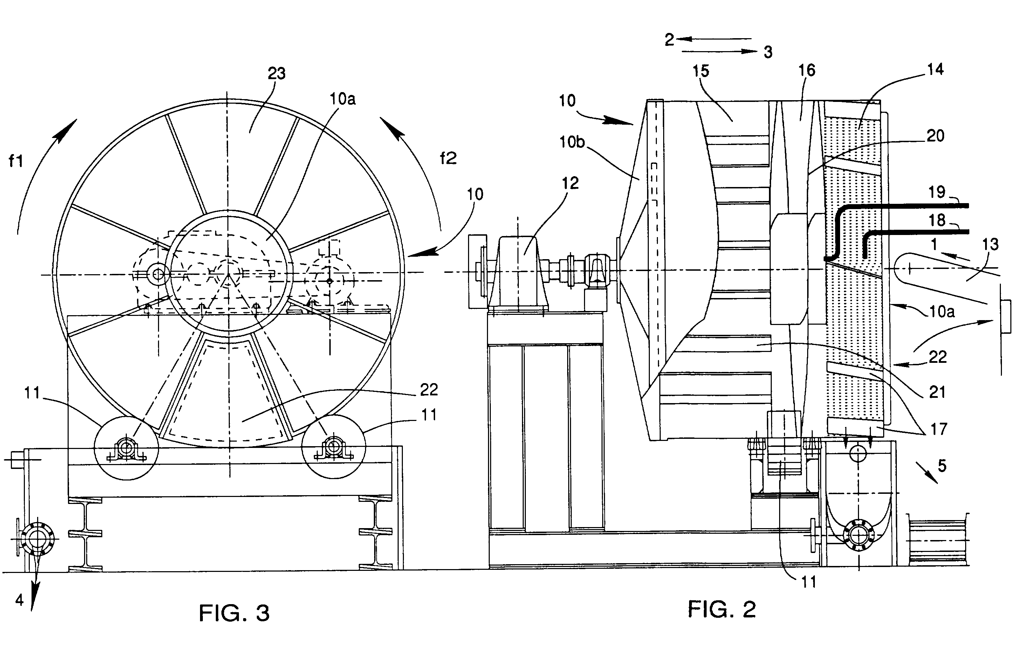

En se reportant aux figures 2 et 3, on voit que selon un premier mode de réalisation le tambour 10 est un tambour à axe sensiblement horizontal dont la pente est comprise entre 0 et 15°, porté par des galets 11 et entraîné en rotation par une transmission 12.

Le tambour 10 est ouvert à une de ses extrémités 10a et fermé à son autre extrémité 10b. Les matières à traiter arrivent dans l'orifice 10a par un convoyeur 13.

Le tambour 10 comporte une chambre de tamisage 14, une chambre de brassage 15 et, entre les deux, une chambre intermédiaire 16.

La paroi de la chambre 14 est perforée et comporte une pluralité de pales inclinées 17. Cette chambre comporte une paroi 23 munie d'un hublot 22.

Une canalisation d'eau 18 débouche au début de la chambre de tamisage tandis qu'une autre canalisation 19 débouche en dehors de la chambre de tamisage.

La chambre intermédiaire 16 est occupée en totalité par une vis d'Archimède 20 qui a la double fonction d'assurer les transfert des matières depuis la chambre de tamisage 14 jusqu'à la chambre de brassage 15 et de réaliser une étanchéité entre ces deux chambres.

La chambre de brassage 15 comporte une pluralité de pales 21 qui sont parallèles à l'axe de rotation du tambour. Elle est fermée d'une part par la cloison 10b et d'autre part par la vis d'Archimède 20 lorsque le tambour 10 tourne selon la flèche f1.

Le dispositif ainsi décrit fonctionne comme suit : le tambour 10 est mis en rotation dans le sens f1 ; la matière à traiter est introduite dans l'orifice 10a par le convoyeur 13. Pendant que le tambour tourne, la paroi 23 empêche les matières de ressortir. La pâte qui se trouve encore parmi les contaminants en est en partie séparée par ce brassage et entraînée avec l'eau résiduelle à travers les perforations de la chambre 14. Les pales 17 poussent progressivement les matières jusque dans la chambre intermédiaire 16.

La vis d'Archimède 20 transfère ces matières jusque dans la chambre 15. Lorsque la chambre 15 est convenablement remplie, de l'eau est éventuellement amenée par la canalisation 19 et les matières sont brassées ce qui a pour effet de détacher complètement les fibres des contaminants.

Le sens de rotation du tambour est alors inversé (pour devenir f2) et la vis d'Archimède ramène l'ensemble matières + eau dans la chambre de tamisage 14 où les fibres sont évacuées avec l'eau.

Eventuellement de l'eau est admise par la canalisation 18 afin de faciliter l'entraînement de la pâte à travers les orifices de la chambre 14.

Le tambour 10 est alors arrêté, le hublot 22 est retiré et les contaminants évacués jusqu'au convoyeur 6.

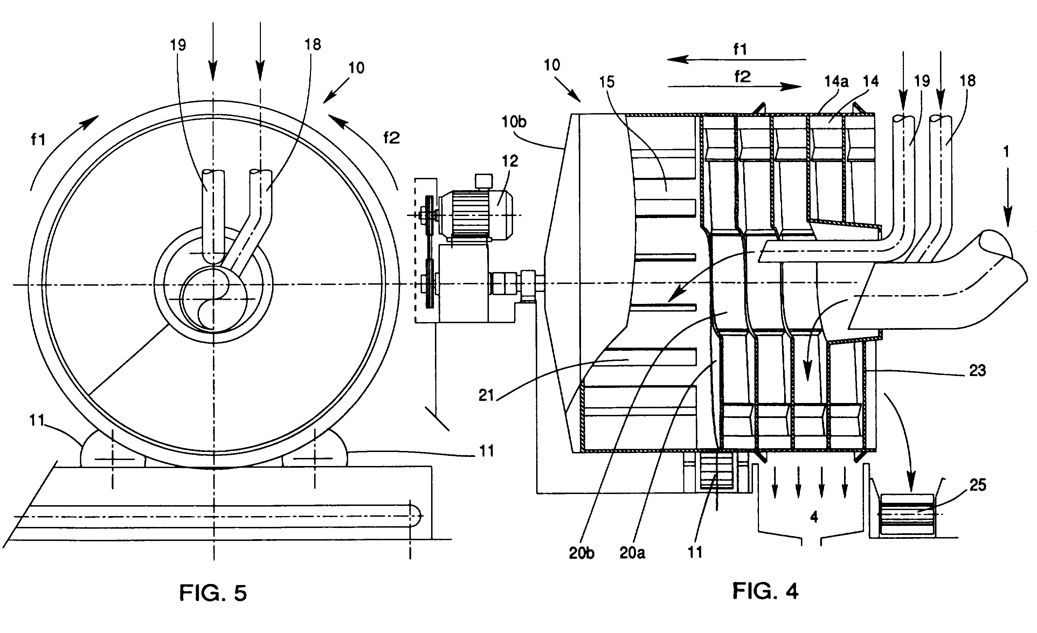

Les figures 4 et 5 représentent un deuxième mode de réalisation dans lequel les mêmes éléments portent les mêmes références.

Dans cette variante de réalisation, il n'y a pas de chambre intermédiaire 16 et le moyen réalisant le déplacement des matières est constitué par une vis d'Archimède 20a dont le centre comporte un alésage central 20b.

Le fonctionnement est pratiquement identique. Les matières sont déversées dans la chambre 14 par une canalisation de gros diamètre qui débouche dans l'alésage central 20b de la vis 20a. Dans un premier temps les matières sont tamisées dans la chambre 14 puis les matières retenues progressent jusqu'à la chambre 15 où elles sont brassées par les pales 21 en présence éventuelle de l'eau amenée par la conduite 19. Ce brassage a pour effet de détacher toutes les fibres des contaminants. On inverse alors le sens de rotation du tambour 10, qui devient f2 et l'ensemble matières + eau est ramené dans la chambre de tamisage 14 où les fibres sont évacuées avec l'eau. Un lavage final est alors effectué avec de l'eau venant de la canalisation 18.

Les contaminants ainsi nettoyés et convoyés par la vis d'Archimède 20a sont déversés sur un convoyeur 25.

La concentration augmente au fur et à mesure de la progression vers la chambre de brassage de sorte que lorsque la matière arrive dans la chambre 15, cette concentration est éventuellement trop élevée. Dans ce cas, pour faciliter le défibrage, il est préférable de procéder à une dilution pour amener la concentration à une valeur optimale. L'addition d'eau au stade du brassage n'est pas obligatoire. Par contre, lors de la troisième phase, c'est-à-dire lors de la phase terminale de tamisage dans la chambre 14 (après inversion du sens de marche), il est nécessaire de réduire la concentration de pâte à une concentration adaptée au tamisage.

On sait que l'eau, lorsqu'elle est chaude, favorise le défibrage de la pâte. En conséquence l'eau amenée dans la phase de brassage sera de préférence de l'eau chaude.

D'autre part, on peut ajouter à cette eau chaude des produits chimiques tels que de la soude ou éventuellement de l'acide sulfurique.

## Revendications

1. Procédé de séparation des fibres de papier et des contaminants pour des mélanges contenant de l'eau, des fibres, des contaminants, des pastilles de papier ou de carton caractérisé par le fait que le mélange est soumis : dans un premier temps à un tamisage; dans un deuxième temps à un brassage puis dans un troisième temps à un nouveau tamisage avec addition d'eau, ce après quoi la pâte retenue par le tamis est évacuée.

2. Procédé selon la revendication 1 selon lequel lors de la phase de brassage, en vue de faciliter la réduction de la taille des pastilles, on ajoute aux résidus du premier tamisage l'un quelconque des éléments suivants :
- de l'eau
- de la chaleur
- des adjuvants chimiques tels que par exemple et de façon non limitative, soude, acide sulfurique qui sont habituellement utilisés pour faciliter la désintégration des vieux papiers ou cartons dans les pulpeurs.

3. Appareil pour la mise en oeuvre du procédé selon l'une quelconque des revendications précédentes caractérisé par le fait qu'il comporte une zone de tamisage et une zone de brassage.

4. Appareil selon la revendication 3 caractérisé par le fait qu'il est constitué par un tambour cylindrique (10) à axe sensiblement horizontal dont la pente est comprise entre 0 et 15° comprenant deux chambres (14, 15) : une chambre de tamisage (14) et une chambre de brassage (15) et des moyens (21, 21a) pour faire aller les produits de la chambre de tamisage (14) à la chambre de brassage (15) puis de celle-ci (15) en retour à la chambre de tamisage (14).

5. Appareil selon la revendication 4 caractérisé par le fait que le tambour cylindrique (10) est un tambour rotatif pouvant tourner dans les deux sens (f1, f2) et comporte un organe hélicoïdal (20) de telle sorte que, lorsque le tambour (10) tourne dans un sens (f1) les matières se déplacent depuis la chambre de tamisage (14) jusqu'à la chambre de brassage et en direction inverse lorsque le tambour (10) tourne dans l'autre sens.

6. Appareil selon la revendication 5, caractérisé par le fait qu'il comporte deux conduites d'eau (18 et 19) l'une (18) amenant l'eau dans la chambre de tamisage (14) pour réaliser un lavage ; l'autre (19) amenant l'eau dans la chambre de brassage (15) afin de permettre d'obtenir un brassage satisfaisant.

7. Appareil selon l'une quelconque des revendications 4 à 6 comportant, entre les deux chambres (14, 15) une chambre additionnelle (16) entièrement occupée par une vis d'Archimède (20).

8. Appareil selon l'une quelconque des revendications 4 à 7 dans lequel la chambre de tamisage (14) comporte une vis d'Archimède (20a) ayant en son centre un alésage (20b) par lequel est introduite la matière.
